# EUROPEAN PATENT SPECIFICATION

(11) **EP 1 323 743 B1**
(45) Date of publication and mention of the grant of the patent: **20.12.2006**
(21) Application number: 02258937.8
(22) Date of filing: 24.12.2002
(51) Int. Cl.: C08F 2/50, C08F 2/44, G02B 1/04

(54) **Resin composition**
Harzzusammensetzung
Composition de résine

(30) Priority: 27.12.2001 JP 2001396149
(43) Date of publication of application: 02.07.2003
(73) Proprietor: TOKUYAMA CORPORATION, Shunan-shi, Yamaguchi 745-0053 (JP)
(72) Inventor: Abe, Takashi, Yamaguchi 745-0053 (JP); Kanoh, Kenichiro, Yamaguchi 745-0053 (JP)
(74) Representative: Benson, John Everett

(56) References cited:
- WO-A-00/04848
- US-A- 4 216 267

## Description

### BACKGROUND OF THE INVENTION

### (Field of the Invention)

The present invention relates to a resin composition. More specifically, the invention relates to a resin composition having excellent light resistance, which permits molded articles thereof to develop yellow color very little and is suited for use as an optical material.

### (Description of the Prior Art)

Resin molded articles have been used in wide range of applications from general household products through up to a variety of applications. However, these resin molded articles are accompanied by such serious problems as insufficient light resistance losing mechanical strength such as shock resistance when they are exposed to ultraviolet rays for extended periods of time and developing yellow color to impair the appearance of the molded articles to a conspicuous degree.

The problem of developing yellow color is particularly serious when the resin molded articles are optical lenses such as spectacle lenses and lenses of optical devices. This is because, the spectacle lenses made of a resin have now been finding widespread applications owing to their advantages such as reduced weight, safety, fashionableness. Due to their mode of use, however, the plastic lenses are in many cases exposed to ultraviolet rays. Besides, from the standpoint of high refractive indexes, the resins used for the optical lenses are preferably obtained by the polymerization of aromatic radically polymerizable monomers such as an ethylene oxide derivative of a tetrabromobisphenol A, a phthalic acid diester derivative, an isophthalic acid diester derivtive and terephthalic acid diester derivative. These resins exhibit excellent optical properties as described above but also have such a property that they are subject to be deteriorated by ultraviolet rays.

When used as optical lenses, the change of color (the development of yellow color) even to a slight degree seriously deteriorates the optical properties and shortens the life of the products. Therefore, it has been strongly desired to improve the properties. Under such circumstances, therefore, various attempts have been made to blend the resin with an ultraviolet ray-absorber. For example, a method has been proposed to blend various compounds having ultraviolet ray-absorbing properties pertaining to benzophenone; benzotriazole, salicilic acid ester, triazine, oxalic acid anilide and nickel complex (see, for example, "PLASTIC DATA BOOK", Kogyo Chosa-kai, December 1, 1999, pp. 935-939).

However, none of these ultraviolet ray-absorbers are capable of exhibiting effect to a sufficient degree in the applications of optical lenses that are subject to be exposed to ultraviolet rays and are not allowed to develop even a faintest degree of yellow color.

### SUMMARY OF THE INVENTION

It is therefore an object of the present invention to provide a resin composition which exhibits a sufficient degree of light resistance even in the applications of optical lenses and little develops yellow color even after used for extended periods of time.

In order to solve the above problems, the present inventors have conducted study diligently, have discovered the fact that use of two particular ultraviolet ray-absorbers in combination helps strikingly improve the light resistance as compared to when they are used alone making it possible to solve the above problems, and have thus completed the invention.

According to the present invention, there is provided a resin composition comprising, being dispersed in a resin in combination;
(a) a cyanoacrylate ultraviolet ray-absorber; and
(b) a benzotriazole ultraviolet ray-absorber.

According to the present invention, there is further provided a polymerizable composition containing:
(A) a radically polymerizable monomer;
(B) a light-resisting component comprising (a) a cyanoacrylate ultraviolet ray-absorber and (b) a benzotriazole ultraviolet ray-absorber; and
(C) a radical polymerization initiator.

The invention further provides an optical lens comprising the above resin composition.

According to the present invention, there is further provided an ultraviolet ray-absorbing composition for a resin, comprising (a) a cyanoacrylate ultraviolet ray-absorber and (b) a benzotriazole ultraviolet ray-absorber.

### DETAILED DESCRIPTION OF THE INVENTION

In the present invention, the greatest feature resides in the use of a cyanoacrylate compound and a benzotriazole compound in combination as an ultraviolet ray-absorber with which the resin is blended. The two compounds synergistically act upon each other to impart light resistance to the resin such as preventing the development of yellow color to a degree very greater than that of when the ultraviolet ray-absorbers are used individually, enabling the resin to exhibit markedly improved light resistance. As a result, the obtained resin molded article develops yellow color very little even when it is exposed to ultraviolet rays for extended periods of time and favorably maintains the mechanical strength such as hardness. Besides, the resin composition of the present invention having excellent light resistance may be blended with the ultraviolet ray-absorber in a decreased amount. Therefore, even in case the ultraviolet ray-absorber itself is colored, development of color due to the ultraviolet ray-absorber can be suppressed and, besides, a great advantage is obtained even from the standpoint of cost.

### (a) Cyanoacrylate ultraviolet ray-absorber:

In the present invention, the cyanoacrylate ultraviolet ray-absorber may be any known ultraviolet ray-absorber having a cyanoacrylate structure without any limitation. Usually, there is preferably used a compound represented by the general formula (1), 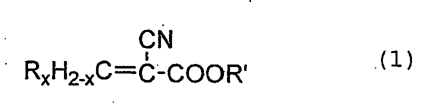 wherein R is an aryl group which may have a substituent, R' is an organic group having 1 to 12 carbon atoms, and x is 1 or 2.

Here, though there is no particular limitation on the number of carbon atoms, it is desired that the aryl group represented by R has 6 to 14 carbon atoms. Concrete examples of the aryl group include phenyl group, tolyl group, xylyl group, naphthyl group, anthryl group and phenanthryl group.

The aryl group may have a substituent. Examples of the substituent include alkoxy groups having 1 to 12 carbon atoms, such as methoxy group, ethoxy group, propoxy group, butoxy group, hexoxy group, 2-ethylhexoxy group, octoxy group and dodecyloxy group; and alkylenedioxy groups having 1 to 4 carbon atoms, such as methylenedioxy group and ethylenedioxy group.

In the present invention, preferred examples of the group R include phenyl group, methoxyphenyl group, methylenedioxyphenyl group, tolyl group, naphthyl group, anthryl group and phenanthryl group.

The organic group represented by R' having 1 to 12 carbon atoms is desirably an alkyl group and, concretely, methyl group, ethyl group, propyl group, butyl group, hexyl group, 2-ethylhexyl group, octyl group or dodecyl group. Particularly preferably, the organic group represented by R' is methyl group, ethyl group, 2-ethylhexyl group or dodecyl group.

In the present invention, a preferred cyanoacrylate ultraviolet ray-absorber is a compound represented by the above general formula (1) in which R is an aryl group having 6 to 14 carbon atoms, R' is an alkyl group having 1 to 12 carbon atoms, and x is 2.

Concrete examples of the cyanoacrylate ultraviolet ray-absorber in the present invention include ethyl-2-cyano-3,3-diphenyl acrylate, 2'-ethylhexyl-2-cyano-3,3-diphenyl acrylate, ethyl-2-cyano-3-(3',4'-methylenedioxyphenyl)-2-acrylate, 2'-ethylhexyl-2-cyano-3-(3",4"-methylenedioxyphenyl)-2-acrylate, dodecyl-2-cyano-3-(3',4'-methylenedioxyphenyl)-2-acrylate, methyl-2-cyano-3,3-diphenyl acrylate, ethyl-2-cyano-3,3-ditolyl acrylate and ethyl-2-cyano-3,3-dinaphthyl acrylate. Among them, ethyl-2-cyano-3,3-diphenyl acrylate and methyl-2-cyano-3,3-diphenyl acrylate are desired, and ethyl-2-cyano-3,3-diphenyl acrylate is most desired.

### (b) Benzotriazole ultraviolet ray-absorber:

The benzotriazole ultraviolet ray-absorber used in the present invention may be any known ultraviolet ray-absorber having a benzotriazole skeleton without limitation. Usually, there is preferably used a compound represented by the general formula (2), 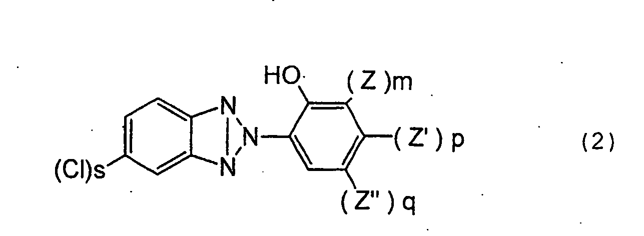 wherein Z, Z' and Z" are, independently from each other, organic groups having 1 to 20 carbon atoms, and m, p, q and s are, independently from each other, 0 or 1.

In the above general formula (2), the organic groups having 1 to 20 carbon atoms represented by Z, Z' and Z" are preferably alkyl groups such as methyl groups, t-butyl groups, t-pentyl groups, octyl groups and dodecyl groups; alkoxycarbonylalkyl groups such as methoxycarbonylethyl groups and octoxycarbonylethyl groups; polyoxyalkylenecarbonylalkyl groups such as polyoxyethyleneoxycarbonylmethyl groups; aryl groups such as phenyl groups, butylphenyl groups, sec-butylphenyl groups, and t-butylphenyl groups; arylalkyl groups such as benzyl groups and phenylethyl groups; acyloxy groups such as acetoxy groups, butyryloxy groups, benzoyloxy groups, naphthoyloxy groups, furoyloxy groups, methacryloyloxy groups and acryloyloxy groups; and N-alkyl group-substituted imide groups such as tetrahydrophthalimidylmethyl groups and maleimidylmethyl groups.

The groups Z, may be those represented by the following general formula (2a), 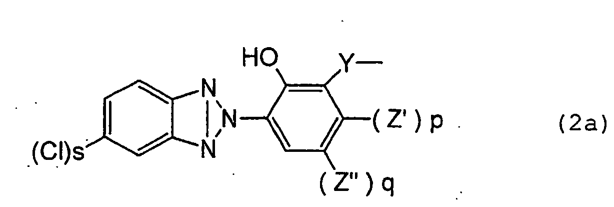 wherein Z', Z", p, q and s are as defined in the above formula (2), and Y is an alkylene group having 1 to 20 carbon atoms.

Examples of the alkylene group represented by Y in the above formula (2a) include methylene group, t-butylene group and octylene group.

In the present invention, it is desired that Z, Z' and Z" in the above formula (2) are alkyl groups having 1 to 12 carbon atoms, more preferably, m and p are both 0 and, Z" is an alkyl group having 1 to 12 carbon atoms.

Concrete examples of the benzotriazole ultraviolet ray-absorber according to the present invention include 2-(2'-hydroxy-5'-methylphenyl)benzotriazole, 2-(2'-hydroxy-5'-t-butylphenyl)benzotriazole, 2-(2'-hydroxy-5'-octylphenyl)benzotriazole, 2-(2'-hydroxy-3'-t-butyl-5'-methylphenyl)-5-chlorobenzotriazole, 2-(2'-hydroxy-3',5'-di-t-butylphenyl)-5-chlorobenzotriazole, 2-(2'-hydroxy-3',5'-di-t-amyl)-5-chlorobenzotriazole, 3-[3-t-butyl-5-(benzotriazole-2-yl)-4-hydroxyphenyl]octyl propionate, 3-[2-t-butyl-3-hydroxy-4-(benzotriazole-2-yl)phenyl]polyoxyethylene propionate ester, 3-[3-t-butyl-5-(5-chloro-2H-benzotriazole-2-yl)-4-hydroxyphenyl]methyl propionate, 2-(2'-hydroxy-3',5'-dit-butylphenyl)benzotriazole, 2-(2'-hydroxy-3',5'-di-t-pentylphenyl)benzotriazole, 2-(2'-hydroxy-3'-dodecyl-5'-methylphenyl)benzotriazole, 2-(2'-hydroxy-3',5'-di-sec-butylphenyl)-5-chlorobenzotriazole, 2-[2'-hydroxy-3',5'-bis(α,α-dimethylbenzyl)-phenyl]benzotriazole, 2-(2'-hydroxy-4'-benzoyloxyphenyl)-5-chlorobenzotriazole, 2-(2'-hydroxy-4'-methacryloyloxyphenyl)benzotriazole, 2-(2H-benzotriazole-2-yl)-4-methyl-6-(3,4,5,6-tetrahydrophthalimidylmethyl)phenol and 2,2'-methylenebis[6-(benzotriazole-2-yl)-4-octylphenol]. Among them, 2-(2'-hydroxy-5'-methylphenyl)benzotriazole, 2-(2'-hydroxy-5'-t-butylphenyl)benzotriazole and 2-(2'-hydroxy-5'-octylphenyl)benzotriazole are preferred, and 2-(2'-hydroxy-5'-methylphenyl)benzotriazole is most preferred.

In the present invention, there is no particular limitation on the amount of (a) the cyanoacrylate ultraviolet ray-absorber and (b) the benzotriazole ultraviolet ray-absorber, with which the resin is blended. It is, however, desired that these ultraviolet ray-absorbers are used in amounts of 0.001 to 10 parts by weight and, more particularly, in amounts of 0.01 to 3 parts by weight per 100 parts by weight of the resin in order to prevent defective light resistance caused by too small amount of blending, to prevent coloring of the resin caused by the color of the ultraviolet ray-absorber itself that is used in too large amounts, and to prevent a decrease in the mechanical strength. There is no particular limitation on the ratio of mixing the cyanoacrylate ultraviolet ray-absorber and the benzotriazole ultraviolet ray-absorber. A suitable ratio of mixing is determined by experimentally confirming, in advance, a ratio at which the light resistance can be exhibited to a sufficient degree. In order to obtain the light resistance to a sufficient degree, it is desired that (a) the cyanoacrylate ultraviolet ray-absorber and (b) the benzotriazole ultraviolet ray-absorber are used at a weight ratio over a range of,
a:b = 9:1 to 1:9
and most desirably,
a:b = 7:3 to 3:7.

### Resin:

In the present invention, there is no particular limitation on the resin that is to be blended with the above two ultraviolet ray-absorbers, and there can be used such thermoplastic resins as polystyrene, polycarbonate, polyethylene terephthalate, polyvinyl chloride and polyolefin or such thermosetting resins as phenol resin and polyester resin. Particularly preferably, however, there is used a resin obtained by polymerizing a radically polymerizable monomer.

Here, the radically polymerizable monomers may be any known monomers having a radically polymerizing property, and may be oligomers having a molecular weight of not larger than 7000. As the radically polymerizable group possessed by the monomer, there can be exemplified allyl group, acryl group, methacryl group and vinyl group. Particularly preferably, the radically polymerizable group is the allyl group since it helps exhibit the effect of the invention to a conspicuous degree.

When exposed to ultraviolet rays as described earlier, those resins having an aromatic ring and, particularly, having an aromatic ring with a nuclear halogen substituent, are deteriorated to a large extent. It is therefore desired that the resin used in the present invention is obtained from a radically polymerizable monomer having an aromatic ring and, particularly, the one obtained from a radically polymerizable monomer having an aromatic ring substituted with a halogen atom.

In general, the resins obtained by polymerizing the raically polymerizable monomer having these aromatic rings exhibit high refractive indexes, and can be suitably used as optical lenses. Therefore, the effects of the present invention are exhibited to a strikingly degree particularly when a resin composition obtained by polymerizing the radically polymerizable monomer having the above aromatic ring, is used as the optical lens.

As the halogen atom to be substituted for the aromatic ring, there can be exemplified chlorine, bromine and fluorine. The effect of the invention is favorably exhibited particularly when bromine is used. The number of substituents for the aromatic ring is, preferably, 1 to 3 per an aromatic ring.

In the present invention, particularly preferred radically polymerizable monomer having the aromatic ring is a compound represented by the following general formula (3), 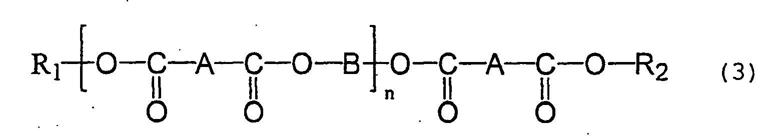 wherein R₁ and R₂ are, independently from each other, organic groups having a radically polymerizable group, A is a divalent organic residue derived from a dicarboxylic acid or an acid anhydride, B is a divalent organic residue derived from a diol, at least either A or B is a group having an aromatic ring, and n is an integer of 1 to 20.

When the resin is to be used as the optical lens, it is desired that the compound represented by the general formula (3) is contained in an amount of at least not smaller than 5% by weight and, more preferably, 10 to 100% by weight in the whole radically polymerizable monomer.

In the radically polymerizable monomer represented by the general formula (3), R₁ and R₂ are organic groups having a radically polymerizable group, and the above-mentioned radically polymerizable groups or the organic groups having these groups can be preferably used.

Further, A is a divalent organic residue obtained by removing two carboxyl groups or one carboxylic anhydride group from a dicarboxylic acid or an acid anhydride, and is desirably the one having 1 to 20 carbon atoms. As the divalent organic residue, there can be exemplified groups derived from carboxylic acids such as malonic acid, succinic acid, glutaric acid, adipic acid, fumaric acid, phthalic acid, isophthalic acid and terephthalic acid or acid anhydrides thereof. The resin tends to develop yellow color when it is the one obtained by polymerizing a radically polymerizable monomer in which A is a group derived from a dicarboxylic acid having an aromatic ring, such as phthalic acid, isophthalic acid, terephthalic acid or an acid anhydride thereof, or from the acid anhydride. Therefore, use of the above radically polymerizable monomer is desired since the effect of the invention is exhibited to a conspicuous degree. These divalent organic residues may have an aromatic ring substituted with a halogen atom.

B is a divalent organic residue obtained by removing two hydroxyl groups from the diol, and is preferably the one having 2 to 30 carbon atoms. As the divalent organic residue, there can be exemplified those divalent groups derived from ethylene glycol, propylene glycol, butane diol, diethylene glycol, neopentyl glycol, catechol, resorcinol, hydroquinone, ethylene oxide adduct of bisphenol-A, propylene oxide adduct of bisphenol-A, dibromoneopentyl glycol, dibromohydroquinone, ethylene oxide adduct of tetrabromobisphenol-A, and propylene oxide adduct of bisphenol-A. Among them, the divalent group derived from a diol having an aromatic ring such as ethylene oxide adduct of bisphenol-A and, particularly, the divalent organic residue having an aromatic ring substituted with a halogen atom like the ethylene oxide adduct of tetrabromobisphenol-A, causes the resin to develop yellow color. When such compounds are used, therefore, the effect of the present invention is more strikingly exhibited.

In the radically polymerizable monomer represented by the above general formula (3), it is desired that at least either A or B is a group having an aromatic ring from the standpoint of obtaining the above-mentioned effect to a striking degree. It is desired that the aromatic ring has been substituted with a halogen atom.

In the general formula (3), further, n is an integer of 1 to 20, preferably, from 1 to 10 and, particularly preferably, from 1 to 5.

Among the radically polymerizable monomers represented by the above general formula (3), the compound that can be used most desirably is a monomer represented by the following general formula (3a), 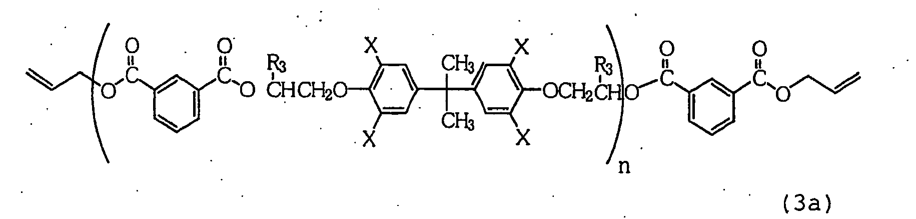 wherein R₃ is a hydrogen atom or a methyl group, and
X is a halogen atom.

The resin obtained from this monomer develops yellow color to a conspicuous degree. When (a) the cyanoacrylate ultraviolet ray-absorber and (b) the benzotriazole ultraviolet ray-absorber are blended according to the present invention, however, development of yellow color is favorably suppressed. In general, R₃ and X present in a plural number in the general formula (3a) are the same atoms or groups, which, however, may be different from one another.

Concrete examples of the radically polymerizable monomers represented by the above general formula (3a) include those ① and ② given below.

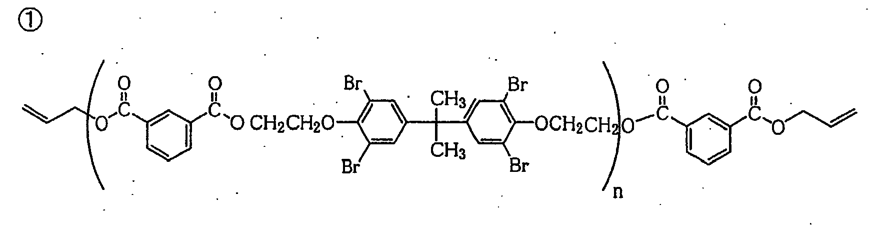

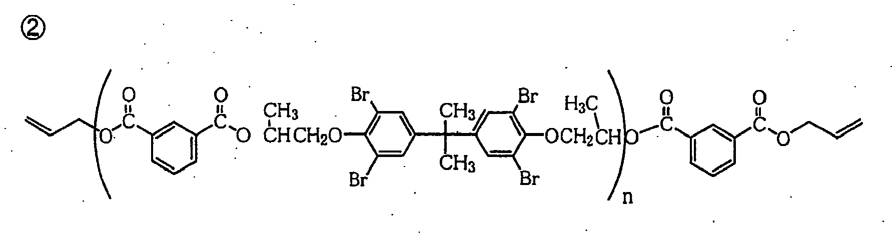

Concrete examples of the radically polymerizable monomers represented by the above general formula (3) include those ③ to ⑤ given below as examples of the radically polymerizable monomers represented by the above general formula (3a),

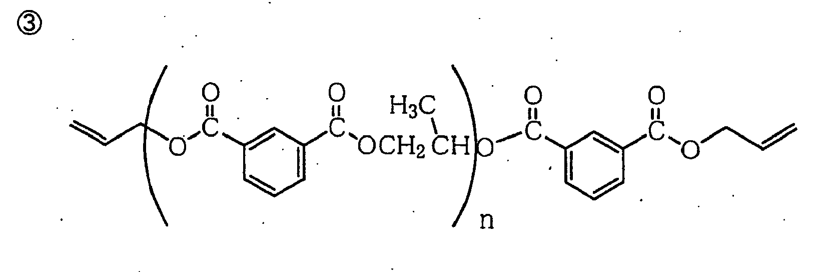

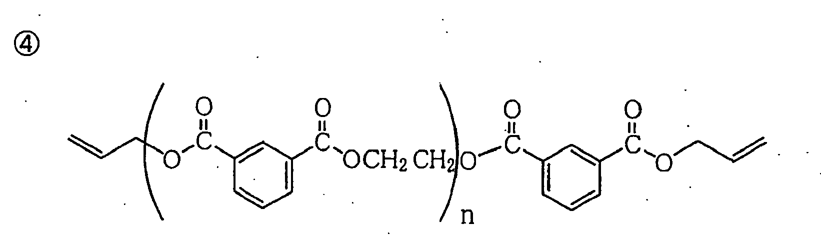

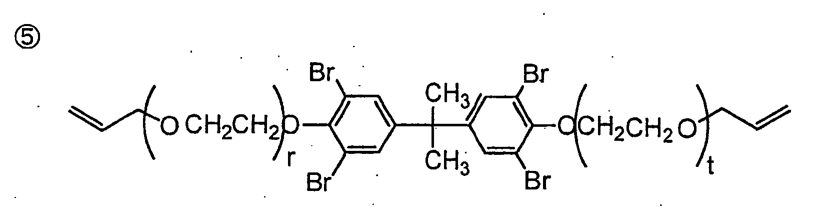

In ③ to ⑤ above, r and t are integers of 1 to 20, respectively, and r + t is an integer of 1 to 40.

Further, examples of the radically polymerizable monomer having an aromatic ring that can be suitably used in the present invention except those represented by the above general formula (3), include diallyl terephthalate, diallyl isophthalate, allyl cyclohexanecarboxylate, triallyl isocyanurate, triallyl trimellitate, diallyl 1,2-cyclohexanedicarboxylate, diallyl 1,3-cyclohexanedicarboxylate, diallyl 1,4-cyclohexanedicarboxylate, dibenzyl maleate, 2,2-bis(4-methacryloxyethoxyphenyl)propane, 2,2-bis(4-methacryloxyethoxy-3,5-dibrmophenyl)propane, chlorostyrene, methyl styrene, vinyl naphthalene, isopropenyl naphthalene, bisphenol A dimethacrylate and phenyl methacrylate. Among them, there can be preferably used, for the applications of optical lenses, diallyl terephthalate, diallyl isophthalate, dibenzyl maleate, 2,2-bis(4-methacryloxyethoxyphenyl)propane, 2,2-bis(4-methacryloxyethoxy-3,5-dibromophenyl)propane.

Among the above arbitrary monomers, further, a trifunctional monomer such as triallyl isocyanurate or triallyl trimellitate works to increase the rate of polymerization and is desired from the standpoint of suppressing "striae" described later.

As other radically polymerizable monomers that can be used in the invention, there can be exemplified diethylene glycol bisallyl carbonate, methyl methacrylate, methyl acrylate, 2-hydroxyethyl methacrylate, ethylene glycol diacrylate, ethylene glycol dimethacrylate and ethylene glycol bisglycidyl methacrylate. Among them, diethylene glycol bisallyl carbonate is preferably used for the application of optical lenses.

A method of polymerizing the polymerizable composition containing the above-mentioned radically polymerizable monomers and the two kinds of ultraviolet ray-absorbers, may be conducted according to a known radical polymerization method by using a radical polymerization initiator. There is no particular limitation on the radical polymerization initiator that is used, and any one can be used without any problem provided it generates radicals upon the application of heat, ultraviolet rays, infrared rays or microwaves, and can be used being suitably selected depending upon the kind of the plastic lens monomer that is used and the method of polymerization.

When a mixture of compounds represented by the formula (3) having various n-values is used as a radically polymerizable monomer in the present invention, there often occurs a phenomenon called "striae" in the polymer that is obtained through the polymerization. In order to obtain a polymer having a small optical distortion while suppressing the occurrence of "striae", it is desired to use the following two kinds of radical polymerization initiators (I) and (II). Here, the "striae" is a phenomenon in that the polymer contains portions having dissimilar refractive indexes which appears to the naked eyes as stripes (often look like a pattern of creeping earthworms).

### Polymerization Initiator (I):

At least one kind of peroxydicarbonate polymerization initiator having a 10-hour half-life decomposition temperature of 40 to 50°C.

### Polymerization Initiator (II):

At least one kind of polymerization initiator having a 10-hour half-life decomposition temperature of not lower than 60°C.

As the peroxydicarbonate polymerization initiator of (I) above, there can be used any known peroxydicarbonate polymerization initiator having a 10-hour half-life decomposition temperature of 40 to 50°C without limitation. Concrete examples of the peroxydicarbonate polymerization initiator that can be preferably used in the invention include diisopropylperoxydicarbonate, di-n-propylperoxydicarbonate, and bis-(4-t-butylcyclohexyl)peroxydicarbonate. These peroxydicarbonate polymerization initiators can be used in a single kind or in a plurality of different kinds being mixed together.

The peroxydicarbonate polymerization initiator (I) is used in an amount of from 0.1 to 2.0 parts by weight and, more preferably, from 0.4 to 1.0 part by weight per 100 parts by weight of the radically polymerizable monomer.

The radical polymerization initiator (II) above may be any known compound without limitation provided it has a 10-hour half-life decomposition temperature of not lower than 60°C. From the standpoint of the effect, it is desired that the component (II) has a 10-hour half-life decomposition temperature of from 60 to 110°C and, particularly, from 60 to 95°C.

Concrete examples of the radical polymerization initiator (II) that can be preferably used in the present invention include peroxyketals such as 1,1-bis(t-butylperoxy)-3,3,5-trimethylcyclohexane [10-hour half-life decomposition temperature of 90°C], 1,1-bis(t-butylperoxy)cyclohexane [91°C], and n-butyl-4,4-bis(t-butylperoxy)butyric acid ester [110°C]; peroxyesters such as t-butylperoxy-2-ethyl hexanoate [74°C], t-butylperoxyisobutylate [78°C], 1,1,3,3-tetramethylbutylperoxy-2-ethyl hexanoate [65°C], and t-butylperoxyacetate [102°C]; diacyl peroxides such as benzoyl peroxide [74°C], p-chlorobenzoyl peroxide [75°C] and lauroyl peroxide [61°C]; ketone peroxides such as methyl ethyl ketone peroxide [105°C], methyl isobutyl ketone peroxide [88°C] and cyclohexanone peroxide [90°C]. Among them, it is desired to use peroxyketals or peroxyesters.

It is desired that the above radical polymerization initiator (II) is used in an amount of from 0.01 to 10 parts by weight and, more preferably, from 0.4 to 5.0 parts by weight per 100 parts by weight of the radically polymerizable monomer from the standpoint of decreasing the optical distortion.

The above radical polymerization initiators (II) can be used in one kind alone or in a plurality of different kinds being mixed together. As the radical polymerization initiator (II), in particular, it is desired to use a polymerization initiator (II-1) having a 10-hour half-life decomposition temperature of not lower than 60°C but lower than 80°C in combination with a polymerization initiator (II-2) having a 10-hour half-life decomposition temperature of from 80 to 95°C. The ratio of their use is 60 to 95% by weight for (II-1) and 5 to 40% by weight for (II-2).

The method of polymerization may be any known one without limitation. When, for example, the obtained resin is to be used as optical lenses, then, the casting polymerization may be employed. The temperature of polymerization is suitably selected over a range of from 20 to 110°C.

In addition to the above cyanoacrylate ultraviolet ray-absorber and the benzotriazole ultraviolet ray-absorber, the resin composition of the present invention may, as required, be further added with inorganic pigments such as ultramarine, cobalt blue and prussian blue; organic dyes such as those of the anthraquinone type, azo type, phthalocyanine type and indigo type; organic pigments such as those of the azo type, phthalocyanine type, quinacridone type, and dioxazine type; and a coloring agent such as fluorescent dye, in order to improve the appearance of the resin. As required, further, the resin composition of the invention may further be suitably blended with antioxidant, releasing agent, coloring-preventing agent or antistatic agent, and other ultraviolet ray-absorbers such as benzophenone type, triazine type, salicylic acid ester type, oxalic acid anilide type and nickel complex type, and with a variety of stabilizers such as hindered amine photostabilizer.

As described above, the resin composition obtained by the present invention exhibits excellent light resistance, develops yellow color very little even after used for extended periods of time, and favorably maintains the mechanical strength such as hardness and the like.

Therefore, the resin composition of the present invention can be effectively used for a variety of resin molded articles. When the resin has a high degree of transparency, it is desired that the resin composition is used for the optical lenses for which even a slightest coloring due to a drop in the optical characteristics is not permitted. Concretely, it is desired that the resin composition is used for spectacle lenses or lenses of optical equipment such as microscope, camera, telescope. In particular, the resin composition is best suited for the spectacle lenses that are subject to be exposed to ultraviolet rays.

### EXAMPLES

The invention will be described in further detail by way of Examples. Described below are the compounds used in Examples and in Comparative Examples.
[Radically polymerizable monomer represented by the formula (3); A~C]
   A: A mixture of the compounds of the following structure comprising of the ones having n = 1 to 5 chiefly the one having n = 1 (90%), 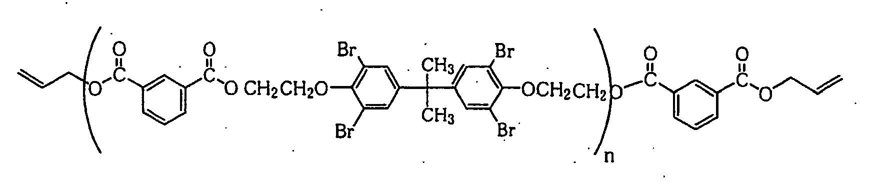
   B: A mixture of the compounds of the following structure comprising of the ones having n = 1 to 7 chiefly the one having n = 1 (80%), 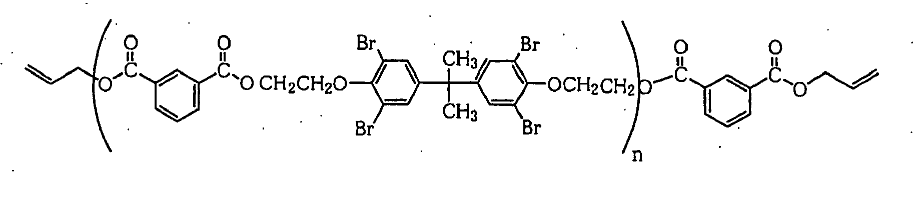
   C: A mixture of the compounds of the following structure comprising of the ones having n = 1 to 5 chiefly the one having n = 1 (90%), 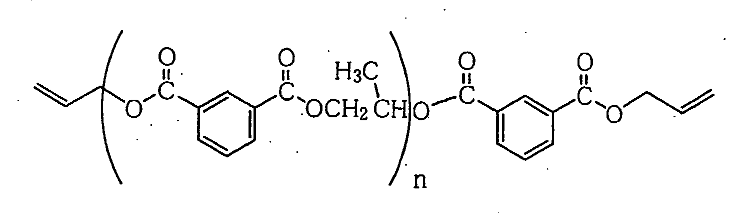
[Arbitrary monomers; D-G]
   D: Compounds of the following structure, 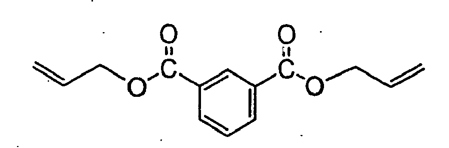
   E: Compounds of the following structure, 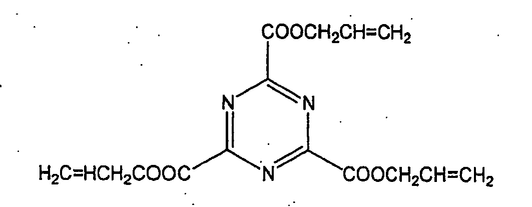
   F: Compounds of the following structure, 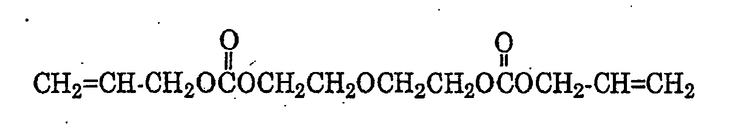
   G: Compounds of the following structure,

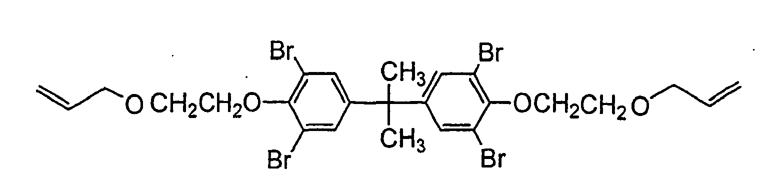

### (2) Ultraviolet ray-absorbent agents.

Ultraviolet ray-absorbers that were used are shown in Tables 1 to 3.

### (3) Polymerization initiators.

Polymerization initiators that were used are shown in Tables 4 and 5.

**Table 1**

| Kind of ultraviolet ray-absorber | Abbreviation | Structural formula |
|---|---|---|
| Cyanoacrylate | a1 | 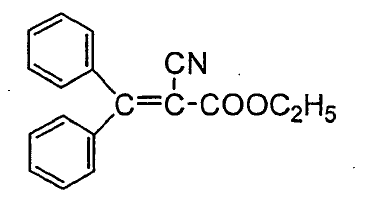 |
| Cyanoacrylate | a2 | 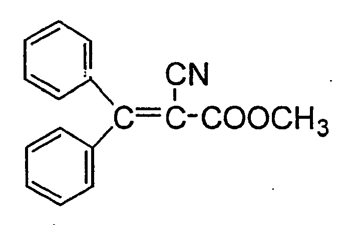 |
| Cyanoacrylate | a3 | 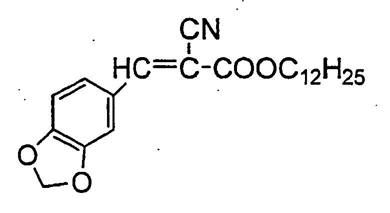 |
| Cyanoacrylate | a4 | 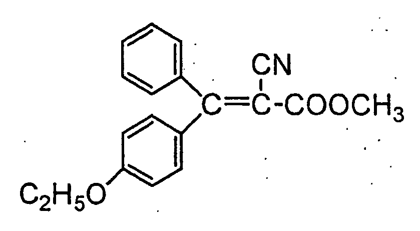 |

**Table 2**

| Kind of ultraviolet ray-absorber | Abbreviation | Structural formula |
|---|---|---|
| Benzotriazole | b1 | 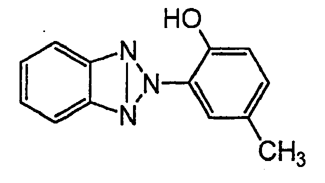 |
| Benzotriazole | b2 | 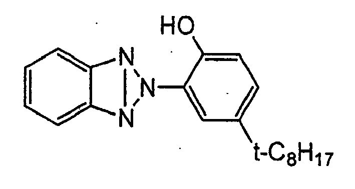 |
| Benzotriazole | b3 | 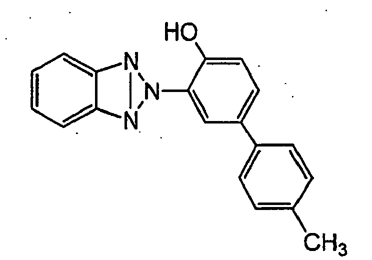 |
| Benzotriazole | b4 | 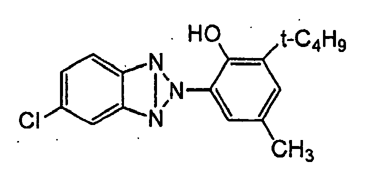 |
| Benzotriazole | b5 | 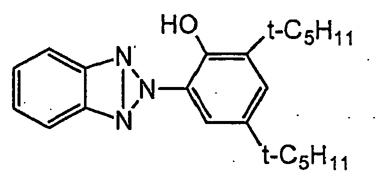 |

**Table 3**

| Kind of ultraviolet ray-absorber | Abbreviation | Structural formula | |
|---|---|---|---|
| Benzotriazole | b6 | 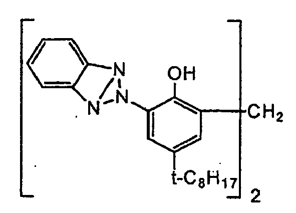 | |
| Benzotriazole | b7 | 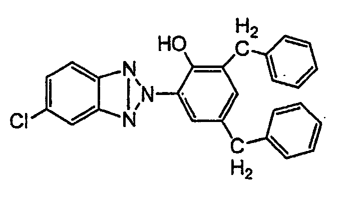 | |
| Benzotriazole | b8 | 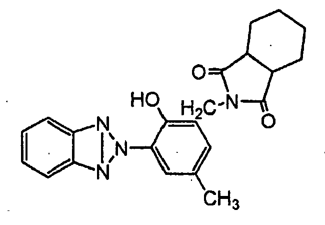 | |
| Acetophenone | c1 | 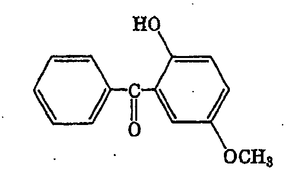 | |
| Oxalic acid anilide | d2 | 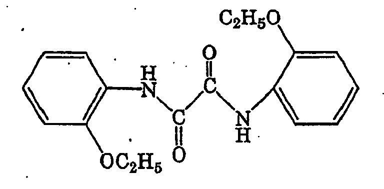 | |

**Table 4**

| Kind of polymerization initiator | Abbreviation | Polymerization initiator (10 hr half-life temperature) | | |
|---|---|---|---|---|
| Peroxydicarbonates | e1 | Diisopropylperoxydicarbonate (41°C) abbreviated as IP 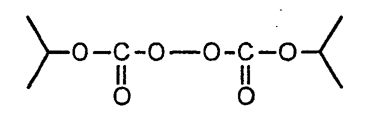 | | |
| Peroxydicarbonates | e2 | Bis-(4-t-butylcyclohexyl)peroxydicarbonate (41°C) 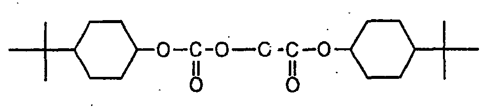 | | |
| Peroxy esters | f1 | 1,1,3,3-Tetramethylbutylperoxy-2-ethyl hexanoate (65°C) 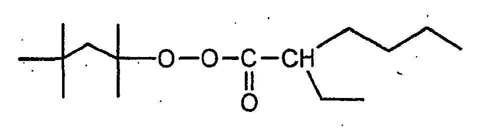 | | |
| Peroxy esters | f2 | t-Butylperoxy-2-ethyl hexanoate (74°C) 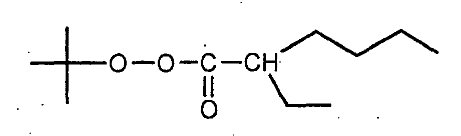 | | |
| Peroxy esters | f3 | t-Butylperoxy acetate (102°C) 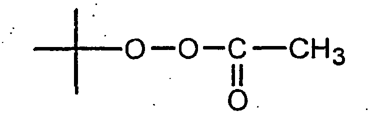 | | |

**Table 5**

| Kind of polymerization initiator | Abbreviation | Polymerization initiator (10 hr half-life temperature) |
|---|---|---|
| Peroxyketals | f4 | 1,1-Bis(t-butylperoxy)3,3,5-trimethylcyclohexane (90°C) 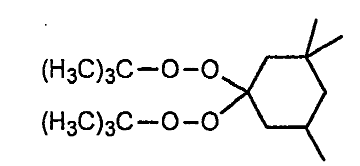 |
| Peroxyketals | f5 | n-butyl-4,4-bis(t-butylperoxy)-butyric acid ester (110°C) 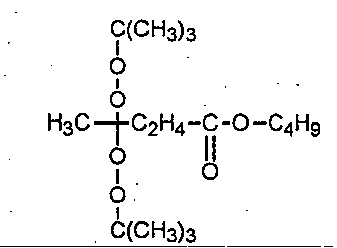 |
| Diacyl peroxides | f6 | Benzoyl peroxide (74°C) 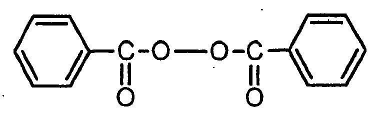 |
| Diacyl peroxides | f7 | Lauroyl peroxide (61°C) 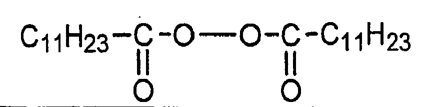 |
| Ketone peroxides | f8 | Methylisobutyl ketone peroxide (88°C) |
| Ketone peroxides | f9 | Cyclohexanone peroside (90°C) |

The molded lens articles were evaluated in compliance with the methods described below.

### (1) Light resistance.

By using Fademeter (model, Suntest CPS) manufactured by Heraeus Co., the lenses after the irradiation for 96 hours and 192 hours were measured for their degree of yellow color and hardness.

### (2) Evaluation of yellowness (YI-value)

Measured by using a color computer (model, SM-5-CH) manufactured by Suga Shinki Co.

### (3) Evaluation of hardness.

The hardness 192 hours after the polymerization was measure by using Akashi Lockwell Hardness Meter (L-scale) manufactured by Akashi Seisakusho Co.

### (4) Evaluation of optical distortion (stria).

The optical distortion (stria) was evaluated by eyes by using an ultra-high pressure mercury lamp. The lenses from which no optical distortion (stria) was recognized was evaluated to be ⊚, the lenses from which the optical distortion (stria) was not almost recognized was evaluated to be O, the lenses from which the optical distortion (stria) was recognized to some degree was evaluated to be Δ, and the lenses from which the optical distortion (stria) was recognized to a considerable degree was evaluated to be ×.

### (5) Measurement of refractive index.

Measured by using Abbe's precision refractometer manufactured by Atago Co.

### (6) Visible light transmittance.

A transmission factor of light of 550 nm was measured by using a spectrophotometer manufactured by Hitachi, Ltd.

### (Examples 1 to 19)

A composition of a predetermined combination of ultraviolet ray-absorbers and radically polymerizable monomers shown in Table 6 was introduced into a beaker, and was mixed and dissolved at 50°C for 2 hours with stirring by using a stirrer. The composition was then filtered through a polytetrafluoroethylene filter having a porous diameter of 1 micron and was, then, blended with a polymerization initiator shown in Table 6 to obtain a polymerizable composition. The obtained polymerizable composition was impregnated into between two pieces of glass plates that have been sealed, and was polymerized by the casting polymerization method while raising the temperature from 40°C up to 110°C over 24 hours. Then, the glass plates were parted, and the after-curing was effected at 120°C for 30 minutes to obtain a plastic lens having a thickness of about 10 mm. The obtained results were as shown in Table 7.

**Table 6**

| Example No. | Radically polymerizable monomer (parts by weight) | | | | Polymerization initiator (parts by weight) | | Ultraviolet ray-absorber (parts by weight) | |
|---|---|---|---|---|---|---|---|---|
| | A | B | C | E | e | f | a | b |
| 1 | 40 | | 60 | | e1: 0.5 | f1: 3.0 | a1: 0.1 | b1: 0.1 |
| 2 | 40 | | 60 | | e1: 0.5 | f1: 3.0, f4: 0.2 | a1: 0.1 | b1: 0.1 |
| 3 | | 30 | 70 | | e1: 0.5 | f4: 1.0 | a1: 0.1 | b1: 0.1 |
| 4 | | 40 | 60 | | e2: 0.9 | f1: 3.0, f4: 0.2 | a1: 0.1 | b1: 0.1 |
| 5 | 40 | | 60 | | e2: 0.9 | f1: 0.8, f4: 0.2 | a1: 0.2 | b1: 0.2 |
| 6 | | 30 | 69 | 1 | e1: 0.5 | f4: 1.0 | a1: 0.2 | b1: 0.2 |
| 7 | | 30 | 69 | 1 | e2: 0.9 | f1: 0.8, f4: 0.2 | a1: 0.1 | b2: 0.1 |
| 8 | 40 | | 60 | | e2: 0.9 | f2: 1.5 | a1: 0.1 | b3: 0.1 |
| 9 | 40 | | 60 | | e2: 0.9 | f3: 1.5 | a3: 0.1 | b4: 0.2 |
| 10 | 40 | | 60 | | e2: 0.9 | f4: 1.5 | a3: 0.1 | b5: 0.2 |
| 11 | 40 | | 60 | | e2: 0.9 | f5: 1.5 | a3: 0.1 | b6: 0.2 |
| 12 | 40 | | 60 | | e2: 0.9 | f6: 1.5 | a3: 0.1 | b7: 0.2 |
| 13 | 40 | | 60 | | e2: 0.9 | f7: 1.5 | a4: 0.1 | b8: 0.2 |
| 14 | 40 | | 60 | | e2: 0.9 | f8: 1.5 | a2: 0.1 | b1: 0.1 |
| 15 | 40 | | 60 | | e2: 0.9 | f9: 1.5 | a2: 0.1 | b2: 0.1 |
| 16 | 40 | | 60 | | e2: 0.9 | f2: 2.0, f5: 0.3 | a1: 0.1 | b1: 0.1, b2: 0.05 |
| 17 | 40 | | 60 | | e2: 0.9 | f1: 1.0, f4: 0.2 | a1: 0.36 | b1: 3.2 |
| 18 | 40 | | 60 | | e2: 0.9 | f1: 2.0, f4: 0.3 | a1: 0.1 | b1: 0.1, b2: 0.05 |
| 19 | 40 | | 60 | | e2: 0.9 | f2: 1.0, f4: 0.2 | a1: 0.1 | b1: 0.1, b4: 0.05 |

**Table 7**

| Example No. | Optical distortion (stria) | Refractive index | Visible light transmittance (%) | Yellowness (YI) | | | | Hardness |
|---|---|---|---|---|---|---|---|---|
| | | | | 0 hr | 96 hr | 192 hr | Difference (192hr-0hr) | |
| 1 | ○ | 1.590 | 89 | 1.5 | 1.6 | 1.9 | 0.4 | 95 |
| 2 | ⊚ | 1.592 | 89 | 1.2 | 1.4 | 1.6 | 0.4 | 103 |
| 3 | ○ | 1.592 | 89 | 1.4 | 1.6 | 1.9 | 0.5 | 105 |
| 4 | ⊚ | 1.593 | 89 | 1.5 | 1.7 | 1.9 | 0.4 | 105 |
| 5 | ⊚ | 1.590 | 90 | 2.2 | 2.2 | 2.3 | 0.1 | 110 |
| 6 | ⊚ | 1.591 | 90 | 2.2 | 2.4 | 2.6 | 0.4 | 115 |
| 7 | ⊚ | 1.591 | 89 | 1.3 | 1.5 | 1.8 | 0.5 | 110 |
| 8 | ○ | 1.593 | 89 | 1.4 | 1.9 | 2.4 | 1.0 | 110 |
| 9 | △ | 1.590 | 89 | 1.4 | 2.2 | 2.9 | 1.5 | 105 |
| 10 | ○ | 1.591 | 90 | 1.5 | 2.1 | 2.7 | 1.2 | 110 |
| 11 | △ | 1.591 | 89 | 1.3 | 2.0 | 2.6 | 1.3 | 110 |
| 12 | △ | 1.590 | 89 | 1.4 | 2.1 | 2.6 | 1.2 | 115 |
| 13 | △ | 1.592 | 90 . | 1.3 | 2.1 | 2.9 | 1.6 | 110 |
| 14 | △ | 1.592 | 90 | 1.3 | 1.5 | 1.7 | 0.4 | 110 |
| 15 | △ | 1.592 | 89 | 1.4 | 1.6 | 1.9 | 0.5 | 110 |
| 16 | ○ | 1.591 | 89 | 1.3 | 1.6 | 1.9 | 0.6 | 115 |
| 17 | ○ | 1.592 | 89 | 3.5 | 3.6 | 3.7 | 0.2 | 115 |
| 18 | ⊚ | 1.593 | 90 | 1.4 | 1.6 | 1.9 | 0.5 | 115 |
| 19 | ⊚ | 1.590 | 89 | 1.3 | 1.4 | 1.6 | 0.3 | 110 |

### (Examples 20 to 32 and Comparative Examples 1 to 14)

A composition of a predetermined combination of ultraviolet ray-absorbers and radically polymerizable monomers shown in Tables 8 and 9 was introduced into a beaker, and was mixed and dissolved at 50°C for 2 hours with stirring by using a stirrer. The composition was then filtered through a polytetrafluoroethylene filter having a porous diameter of 1 micron and was, then, blended with a polymerization initiator shown in Tables 8.and 9 to obtain a polymerizable composition. The obtained polymerizable composition was injected into between two pieces of glass plates that have been sealed, and was polymerized by the casting polymerization method while raising the temperature from 40°C up to 110°C over 24 hours (from 30°C to 90°C over 18 hours in the case of the peroxydicarbonates only). The above polymerization conditions had been optimized so that lenses having good optical properties were obtained). Then, the glass plates were parted, and the after-curing was effected at 120°C for 30 minutes to obtain a plastic lens having a thickness of about 10 mm. The obtained results were as shown in Tables 10 and 11.

**Table 8**

| Example No. | Radically polymerizable monomer (parts by weight) | | | | | Polymerization initiator (parts by weight) | | Ultraviolet ray-absorber (parts by weight) | |
|---|---|---|---|---|---|---|---|---|---|
| | A | C | D | F | G | e | f | a | b |
| 20 | 80 | - | 15 | 5 | - | e1: 0.5 | f1: 3.0 | a1: 0.1 | b1: 0.1 |
| 21 | 70 | - | - | 30 | - | e1: 0.5 | f1: 3.0, f4: 0.2 | a1: 0.1 | b1: 0.1 |
| 22 | - | - | - | 30 | 70 | e1: 0.5 | f4: 1.0 | a1: 0.1 | b1: 0.1 |
| 23 | - | - | 30 | 10 | 60 | e2: 0.9 | f1: 3.0, f4: 0.2 | a1: 0.1 | b1: 0.1 |
| 24 | 80 | - | 15 | 5 | - | e2: 0.9 | f1: 0.8, f4: 0.2 | a1: 0.2 | b1: 0.2 |
| 25 | - | 70 | - | 30 | - | e1: 0.5 | f4: 1.0 | a1: 0.2 | b1: 0.2 |
| 26 | 80 | - | 15 | 5 | - | e2: 0.9 | f1: 0.8, f4: 0.2 | a1: 0.1 | b2: 0.1 |
| 27 | 80 | - | 15 | 5 | - | e1: 1.0 | ---- | a1: 0.1 | b1: 0.1 |
| 28 | 80 | - | 15 | 5 | - | e2: 2.0 | ---- | a1: 0.1 | b2: 0.2 |
| 29 | 80 | - | 15 | 5 | - | e1: 1.5 | ---- | a1: 0.1 | b1: 0.1 |
| 30 | 70 | - | - | 30 | - | e1: 1.5 | ---- | a1: 0.1 | b1: 0.1 |
| 31 | 80 | - | 15 | 5 | - | e1: 1.5 | ---- | a1: 0.2 | b1: 0.2 |
| 32 | - | 70 | - | 30 | - | e1: 1.5 | ---- | a1: 0.2 | b1: 0.2 |

**Table 9**

| Comparative Example No. | Radically polymerizable monomer (parts by weight) | | | | | Polymerization initiator (parts by weight) | Ultraviolet ray-absorber (parts by weight) | | | |
|---|---|---|---|---|---|---|---|---|---|---|
| | A | C | D | F | G | e | a | b | c | d |
| 1 | 80 | - | 15 | 5 | - | e1: 1.5 | a1: 0.2 | --- | --- | --- |
| 2 | 70 | - | - | 30 | - | e1: 1.5 | --- | b1: 0.2 | --- | --- |
| 3 | - | - | - | 30 | 70 | e1: 1.5 | a1: 0.1 | --- | --- | --- |
| 4 | - | - | 30 | 10 | 60 | e1: 1.5 | a1: 0.1 | --- | --- | d1: 0.1 |
| 5 | 80 | - | 15 | 5 | - | e1: 1.5 | --- | b1: 0.1 | c1: 0.1 | --- |
| 6 | - | 70 | - | 30 | - | e1: 1.5 | a1: 0.2 | --- | --- | d1: 0.2 |
| 7 | 80 | - | 15 | 5 | - | e1: 1.5 | a1: 0.2 | --- | c1: 0.2 | --- |
| 8 | 80 | - | 15 | 5 | - | e1: 1.5 | a2: 0.2 | --- | --- | --- |
| 9 | 80 | - | 15 | 5 | - | e1: 1.5 | a3: 0.2 | --- | --- | --- |
| 10 | 80 | - | 15 | 5 | - | e1: 1.5 | a2: 0.2 | --- | c1: 0.2 | --- |
| 11 | 80 | - | 15 | 5 | - | e1: 1.5 | a3: 0.2 | --- | --- | d1: 0.2 |
| 12 | 80 | - | 15 | 5 | - | e1: 1.5 | a2: 0.2 | --- | --- | d1: 0.2 |
| 13 | 80 | - | 15 | 5 | - | e1: 1.5 | --- | b2: 0.2 | --- | --- |
| 14 | 80 | - | 15 | 5 | - | e1: 1.5 | --- | b3: 0.2 | --- | --- |

**Table 10**

| Example No. | Optical distortion (stria) | Visible light transmittance (%) | Yellowness (YI) | | | | Hardness |
|---|---|---|---|---|---|---|---|
| | | | 0 hr | 96 hr | 192 hr | Difference (192hr-0hr) | |
| 20 | ○ | 89 | 1.3 | 1.5 | 1.7 | 0.4 | 95 |
| 21 | ⊚ | 89 | 1.4 | 1.6 | 1.8 | 0.4 | 103 |
| 22 | ○ | 89 | 1.3 | 1.5 | 1.8 | 0.5 | 110 |
| 23 | ⊚ | 89 | 1.5 | 1.7 | 2.0 | 0.5 | 105 |
| 24 | ⊚ | 90 | 1.4 | 1.6 | 1.7 | 0.3 | 110 |
| 25 | ○ | 90 | 1.5 | 1.7 | 1.9 | 0.4 | 115 |
| 26 | ⊚ | 90 | 1.2 | 1.4 | 1.6 | 0.4 | 115 |
| 27 | × | 89 | 1.4 | 1.6 | 1.9 | 0.5 | 115 |
| 28 | × | 89 | 1.2 | 1.4 | 1.6 | 0.4 | 110 |
| 29 | × | 90 | 1.5 | 1.6 | 1.8 | 0.3 | 105 |
| 30 | × | 90 | 1.2 | 1.4 | 1.6 | 0.4 | 115 |
| 31 | × | 90 | 1.5 | 1.7 | 1.9 | 0.4 | 110 |
| 32 | × | 89 | 2.2 | 2.2 | 2.3 | 0.1 | 105 |

**Table 11**

| Comparative Example No. | Optical distortion (stria) | Visible light transmittance (%) | Yellowness (YI) | | | | Hardness |
|---|---|---|---|---|---|---|---|
| | | | 0 hr | 96 hr | 192 hr | Difference (192hr-0hr) | |
| 1 | × | 90 | 2.0 | 4.5 | 8.2 | 6.2 | 130 |
| 2 | × | 89 | 1.8 | 3.8 | 6.0 | 4.2 | 125 |
| 3 | × | 90 | 1.5 | 4.7 | 9.3 | 7.8 | 135 |
| 4 | × | 89 | 1.7 | 4.2 | 7.2 | 5.5 | 125 |
| 5 | × | 89 | 1.8 | 4.3 | 7.8 | 6.0 | 130 |
| 6 | × | 90 | 2.2 | 4.1 | 6.5 | 4.3 | 125 |
| 7 | × | 89 | 2.2 | 3.7 | 8.5 | 6.3 | 130 |
| 8 | × | 90 | 1.6 | 4.2 | 6.9 | 5.3 | 120 |
| 9 | × | 90 | 1.5 | 4.1 | 6.7 | 5.2 | 120 |
| 10 | × | 90 | 1.6 | 4.8 | 8.1 | 6.5 | 115 |
| 11 | × | 89 | 1.4 | 4.5 | 7.6 | 6.2 | 115 |
| 12 | × | 90 | 1.7 | 4.8 | 7.9 | 6.2 | 120 |
| 13 | × | 90 | 1.7 | 4.6 | 7.4 | 5.7 | 110 |
| 14 | × | 89 | 1.6 | 4.3 | 7.0 | 5.4 | 115 |

As will be obvious from the comparison of Table 10 with Table 11, use of the cyanoacrylate ultraviolet ray-absorber and the benzotriazole ultraviolet ray-absorber in combination makes it possible to obtain a polymer having excellent light resistance property.

## Claims

1. A resin composition comprising a resin and, dispersed therein:
(a) a cyanoacrylate ultraviolet ray-absorber; and
(b) a benzotriazole ultraviolet ray-absorber.

2. A resin composition according to Claim 1, wherein (a) the cyanoacrylate ultraviolet ray-absorber is a compound represented by the general formula (1), 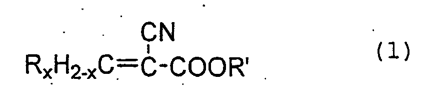 wherein R is an aryl group which may have a substituent, R' is an organic group having 1 to 12 carbon atoms, and x is 1 or 2,
and (b) the benzotriazole ultraviolet ray-absorber is a compound represented by the general formula (2), 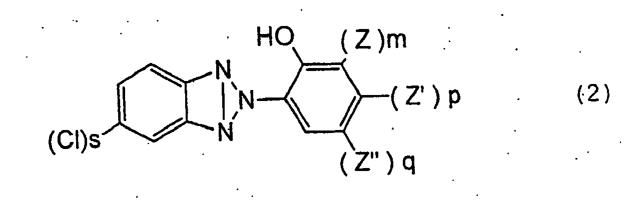 wherein Z, Z' and Z" are, independently from each other, organic groups having 1 to 20 carbon atoms, and m, p, q and s are, independently from each other, 0 or 1.

3. A resin composition according to Claim 1 or 2, wherein (a) the cyanoacrylate ultraviolet ray-absorber and (b) the benzotriazole ultraviolet ray-absorber are contained in amounts of from 0.001 to 10 parts by weight per 100 parts by weight of the resin, respectively.

4. A resin composition according to Claim 3, wherein (a) the cyanoacrylate ultraviolet ray-absorber and (b) the benzotriazole ultraviolet ray-absorber are contained in amounts of from 0.01 to 3 parts by weight per 100 parts by weight of the resin, respectively.

5. A resin composition according to any preceding claim, wherein (a) the cyanoacrylate ultraviolet ray-absorber and (b) the benzotriazole ultraviolet ray-absorber are contained at a weight ratio of a:b = 7:3 to 3:7.

6. A resin composition according to any preceding claim, wherein the resin is obtained by polymerizing or copolymerizing one or more radically polymerizable monomers.

7. A resin composition according to Claim 6, wherein the radically polymerizable monomer includes an aromatic ring having a halogen atom as a substituent.

8. A polymerizable composition containing:
(A) a radically polymerizable monomer;
(B) a light-resisting component comprising (a) a cyanoacrylate ultraviolet ray-absorber and (b) a benzotriazole ultraviolet ray-absorber; and
(C) a radical polymerization initiator.

9. A polymerizable composition according to Claim 8, wherein
(I) at least one kind of peroxydicarbonate polymerization initiator having a 10-hour half-life decomposition temperature of 40 to 50°C; and
(II) at least one kind of polymerization initiator having a 10-hour half-life decomposition temperature of not lower than 60°C;
are used in combination as the radical polymerization initiator.

10. A polymerizable composition according to Claim 8 or 9, wherein the radically polymerizable monomer (A):
has an aromatic ring optionally substituted with a halogen atom; or is a compound represented by the following general formula (3), 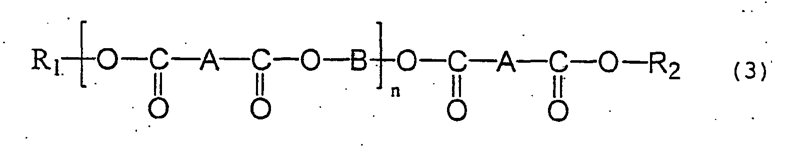
wherein R₁ and R₂ are, independently from each other, organic groups having a radically polymerizable group, A is a divalent organic residue derived from a dicarboxylic acid or an acid anhydride, B is a divalent organic residue derived from a diol, at least either A or B is a group having an aromatic ring, and n is an integer of 1 to 20.

11. An optical lens comprising the resin composition of any of Claims 1 to 7 or a resin produced by polymerizing a composition of any of Claims 8 to 10.

12. An ultraviolet ray-absorbing composition for a resin; comprising (a) a cyanoacrylate ultraviolet ray-absorber and (b) a benzotriazole ultraviolet ray-absorber.

## Patentansprüche

1. Harzzusammensetzung, umfassend ein Harz und darin dispergiert:
(a) einen Cyanacrylat-Absorber für ultraviolette Strahlen, und
(b) einen Benzotriazol-Absorber für ultraviolette Strahlen.

2. Harzzusammensetzung nach Anspruch 1, wobei (a) der Cyanacrylat-Absorber für ultraviolette Strahlen eine Verbindung ist, welche dargestellt wird durch die allgemeine Formel (1) 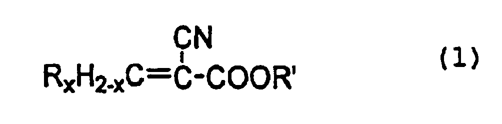 worin R eine Arylgruppe ist, die einen Substituenten aufweisen kann, R' eine organische Gruppe mit 1 bis 12 Kohlenstoffatomen ist, und x gleich 1 oder 2 ist,
und (b) der Benzotriazol-Absorber für ultraviolette Strahlen eine Verbindung ist, welche dargestellt wird durch die allgemeine Formel (2) 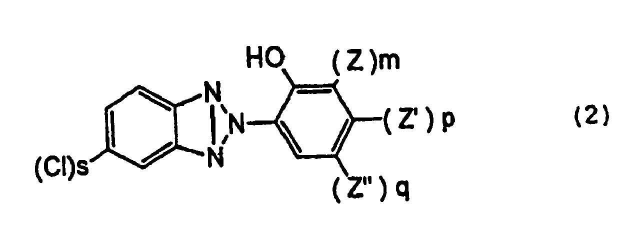 worin Z, Z' und Z" unabhängig voneinander organische Gruppen mit 1 bis 20 Kohlenstoffatomen sind, und m, p, q und s unabhängig voneinander 0 oder 1 sind.

3. Harzzusammensetzung nach Anspruch 1 oder 2, wobei (a) der Cyanacrylat-Absorber für ultraviolette Strahlen und (b) der Benzotriazol-Absorber für ultraviolette Strahlen in Mengen von 0,001 bis 10 Gewichtsteilen pro 100 Gewichtsteile des Harzes vorhanden sind.

4. Harzzusammensetzung nach Anspruch 3, wobei (a) der Cyanacrylat-Absorber für ultraviolette Strahlen und (b) der Benzotriazol-Absorber für ultraviolette Strahlen in Mengen von 0,01 bis 3 Gewichtsteilen pro 100 Gewichtsteile des Harzes vorhanden sind.

5. Harzzusammensetzung nach einem der vorhergehenden Ansprüche, wobei (a) der Cyanacrylat-Absorber für ultraviolette Strahlen und (b) der Benzotriazol-Absorber für ultraviolette Strahlen in einem Gewichtsverhältnis von a:b = 7:3 bis 3:7 vorhanden sind.

6. Harzzusammensetzung nach einem der vorhergehenden Ansprüche, wobei das Harz erhalten wird durch Polymerisieren oder Copolymerisieren von einem oder mehreren radikalisch polymerisierbaren Monomeren.

7. Harzzusammensetzung nach Anspruch 6, wobei das radikalisch polymerisierbare Monomer einen aromatischen Ring mit einem Halogenatom als einen Substituenten umfasst.

8. Polymerisierbare Zusammensetzung, enthaltend:
(A) ein radikalisch polymerisierbares Monomer,
(B) eine lichtbeständige Komponente, umfassend (a) einen Cyanacrylat-Absorber für ultraviolette Strahlen und (b) einen Benzotriazol-Absorber für ultraviolette Strahlen, und
(C) einen radikalischen Polymerisationsinitiator.

9. Polymerisierbare Zusammensetzung nach Anspruch 8, wobei
(I) mindestens ein Typ an Peroxydicarbonat-Polymerisationsinitiator mit einer 10-Stunden-Halbwertszeit-Zersetzungstemperatur von 40 bis 50°C, und
(II) mindestens ein Typ Polymerisationsinitiator mit einer 10-Stunden-Halbwertszeit-Zersetzungstemperatur von nicht niedriger als 60°C
in Kombination als der radikalische Polymerisationsinitiator verwendet werden.

10. Polymerisierbare Zusammensetzung nach Anspruch 8 oder 9, wobei das radikalische Monomer (A):
einen gegebenenfalls mit einem Halogenatom substituierten aromatischen Ring aufweist oder eine Verbindung ist, welche dargestellt wird durch die nachfolgende allgemeine Formel (3) 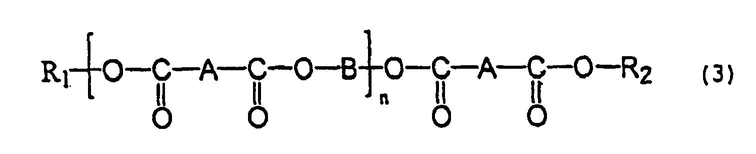
worin R₁ und R₂ unabhängig voneinander organische Gruppen mit einer radikalisch polymerisierbaren Gruppe sind, A ein zweiwertiger organischer Rest ist, der von einer Dicarbonsäure oder einem Säureanhydrid abgeleitet ist, B ein zweiwertiger organischer Rest ist, der von einem Diol abgeleitet ist, mindestens entweder A oder B eine Gruppe mit einem aromatischen Ring ist, und n eine ganze Zahl von 1 bis 20 ist.

11. Optische Linse, umfassend die Harzzusammensetzung nach einem der Ansprüche 1 bis 7, oder ein Harz, hergestellt durch Polymerisieren einer Zusammensetzung nach einem der Ansprüche 8 bis 10.

12. Ultraviolette Strahlen-absorbierende Zusammensetzung für ein Harz, umfassend (a) einen Cyanacrylat-Absorber für ultraviolette Strahlen, und (b) einen Benzotriazol-Absorber für ultraviolette Strahlen.

## Revendications

1. Composition de résine comprenant une résine et, dispersés dans celle-ci :
(a) un absorbant de rayons ultraviolets de type cyanoacrylate ; et
(b) un absorbant de rayons ultraviolets de type benzotriazole.

2. Composition de résine selon la revendication 1, dans laquelle l'absorbant de rayons ultraviolets de type cyanoacrylate est un composé représenté par la formule générale (1), 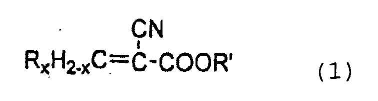 dans laquelle R est un groupe aryle qui peut avoir un substituant, R' est un groupe organique ayant de 1 à 12 atomes de carbone, et x vaut 1 ou 2,
et (b) l'absorbant de rayons ultraviolets de type benzotriazole est un composé représenté par la formule générale (2), 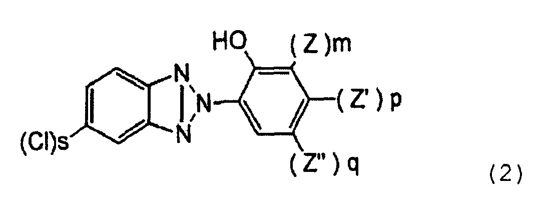 dans laquelle Z, Z' et Z" sont, indépendamment l'un de l'autre, des groupes organiques ayant de 1 à 20 atomes de carbone, et m, p, q et s valent indépendamment l'un de l'autre 0 ou 1.

3. Composition de résine selon la revendication 1 ou 2, dans laquelle (a) l'absorbant de rayons ultraviolets de type cyanoacrylate et (b) l'absorbant de rayons ultraviolets de type benzotriazole sont contenus en des quantités respectivement de 0,01 à 10 parties en poids pour 100 parties en poids de la résine.

4. Composition de résine selon la revendication 3, dans laquelle (a) l'absorbant de rayons ultraviolets de type cyanoacrylate et (b) l'absorbant de rayons ultraviolets de type benzotriazole sont contenus respectivement en des quantités de 0,01 à 3 parties en poids pour 100 parties en poids de la résine.

5. Composition de résine selon l'une quelconque des revendications précédentes, dans laquelle (a) l'absorbant de rayons ultraviolets de type cyanoacrylate et (b) l'absorbant de rayons ultraviolets de type benzotriazole sont contenus selon un rapport en poids de a:b = 7:3 à 3:7.

6. Composition de résine selon l'une quelconque des revendications précédentes, dans laquelle la résine est obtenue par polymérisation ou copolymérisation d'un ou plusieurs monomères à polymérisation radicalaire.

7. Composition de résine selon la revendication 6, dans laquelle le monomère à polymérisation radicalaire comprend un noyau aromatique ayant un atome d'halogène comme substituant.

8. Composition polymérisable contenant :
(A) un monomère à polymérisation radicalaire ;
(B) un composant résistant à la lumière comprenant (a) un absorbant de rayons ultraviolets de type cyanoacrylate et (b) un absorbant de rayons ultraviolets de type benzotriazole ; et
(C) un initiateur de polymérisation radicalaire.

9. Composition polymérisable selon la revendication 8, dans laquelle :
(I) au moins un type d'initiateur de polymérisation à base peroxydicarbonate ayant une température de décomposition de demi-vie de 10 heures de 40 à 50°C ; et
(II) au moins un type d'initiateur de polymérisation ayant une température de décomposition de demi-vie de 10 heures de pas moins de 60°C ;
sont utilisés de façon combinée comme initiateur de polymérisation radicalaire.

10. Composition polymérisable selon la revendication 8 ou 9, dans laquelle le monomère à polymérisation radicalaire (A) :
a un noyau aromatique éventuellement substitué par un atome d'halogène ; ou
est un composé représenté par la formule générale (3) suivante 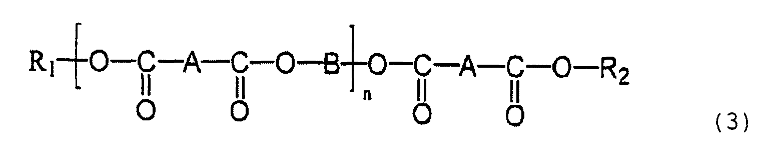
dans laquelle R₁ et R₂ sont, indépendamment l'un de l'autre, des groupes organiques ayant un groupe à polymérisation radicalaire, A est un résidu organique divalent dérivé d'un acide dicarboxylique ou d'un anhydride d'acide, B est un résidu organique divalent dérivé d'un diol, au moins l'un de A et B est un groupe ayant un noyau aromatique, et n est un nombre entier de 1 à 20.

11. Lentille optique comprenant la composition de résine selon l'une quelconque des revendications 1 à 7 ou une résine produite par polymérisation d'une composition selon l'une quelconque des revendications 8 à 10.

12. Composition absorbant les rayons ultraviolets pour une résine, comprenant (a) un absorbant de rayons ultraviolets de type cyanoacrylate et (b) un absorbant de rayons ultraviolets de type benzotriazole.
